# EUROPÄISCHE PATENTSCHRIFT

(11) **EP 3 513 089 B1**
(45) Veröffentlichungstag und Bekanntmachung des Hinweises auf die Patenterteilung: **26.02.2020**
(21) Anmeldenummer: 17768108.7
(22) Anmeldetag: 14.09.2017
(51) Int. Cl.: F16D 51/04, F16D 65/08, F16D 65/52, F16D 125/66

(54) **BREMSVORRICHTUNG UND VERFAHREN ZUM BETREIBEN EINER BREMSTROMMEL**
BRAKE DEVICE AND METHOD FOR OPERATING A BRAKE DRUM
DISPOSITIF DE FREINAGE ET PROCÉDÉ POUR FAIRE FONCTIONNER UN TAMBOUR DE FREIN

(30) Priorität: 16.09.2016 DE 102016117461
(43) Veröffentlichungstag der Anmeldung: 24.07.2019
(73) Patentinhaber: SAF-HOLLAND GmbH, 63856 Bessenbach (DE)
(72) Erfinder: WEBER, Karsten, 63741 Aschaffenburg (DE)
(74) Vertreter: Müller Schupfner & Partner Patent- und Rechtsanwaltspartnerschaft mbB
(86) Internationale Anmeldenummer: PCT/EP2017/073156
(87) Internationale Veröffentlichungsnummer: WO 2018/050755

(56) Entgegenhaltungen:
- DE-B- 1 059 725
- DE-C- 434 900
- FR-A- 649 953
- FR-A- 822 402
- GB-A- 457 420
- JP-A- 2007 107 666
- US-A- 2 041 536
- US-A- 3 368 648

## Beschreibung

Die vorliegende Erfindung betrifft eine Bremsvorrichtung, insbesondere eine Bremstrommel, und ein Verfahren zum Betreiben einer Bremsvorrichtung.

Bremsvorrichtungen, insbesondere Trommelbremsen, sind hinlänglich, z. B. aus DE 10 2009 027 081 A, bekannt. Hierbei sind Trommelbremsen regelmäßig für Nutzfahrzeuge vorgesehen, bei denen die Räder an starren Achsen über Lager, insbesondere Kegelrollenlager, rotierend gelagert sind. Um die Räder abzubremsen, wird eine Rotationsbewegung einer mit dem jeweiligen Rad drehfest verbundenen Bremstrommel unterbunden. Hierfür sind typischerweise zwei Bremsbacken innerhalb der Bremstrommel angeordnet, die zwischen einem Bremszustand, in dem Bremsbeläge an den Bremsbacken in Wirkverbindung mit einer Innenseite der Trommelbremse treten, und einem Freilaufzustand, in dem die Wirkverbindung aufgehoben wird, verschwenkt werden. Allerdings ist die Realisierung einer solchen Trommelbremse mit einer Vielzahl von Einzelbauteilen verbunden.

Es ist somit eine Aufgabe der vorliegenden Erfindung eine Bremsvorrichtung bereitzustellen, die gegenüber denen aus dem Stand der Technik weniger Einzelbauteile bedarf und entsprechend kompakter ausgestaltet ist, ohne dass eine von der Bremsvorrichtung ausgehende Bremswirkung nachteilig beeinträchtigt wird.

Die Druckschrift FR 649 953 A offenbart eine Bremsvorrichtung (Figur 2) zum Bremsen eines Rads mit einer Bremstrommel (1), einem in der Bremstrommel (1) anordbaren Bremsbelagsträger (7) mit mindestens einem Bremsbelag (20) und eine Aktuatoreinrichtung zur reversiblen Überführung des Bremsbelagsträgers (7) zwischen einem Bremszustand, in dem der Bremsbelag (20) mit der Bremstrommel (1) in einer Wirkverbindung steht, und einem Freilaufzustand, in dem die Wirkverbindung zwischen dem Bremsbelag (20) und der Bremstrommel (1) aufgehoben ist, wobei der Bremsbelagsträger (7) zur Überführung vom Freilaufzustand in den Bremszustand elastisch deformierbar ist (Seite 1, Zeilen 1 bis 17).

Die FR 649 953 A zeigt in der Figur 2 zudem einen einzigen Bremsbelagsträger (7), der als offener Ring ausgestaltet ist und sich dabei um mehr als 180° in Umlaufrichtung gesehen erstreckt.

Die DE 10 59 725 B bezieht sich auf eine Innenbackenbremse mit einer einzigen ringförmigen Bremsbacke, die an den offenen Enden durch einen Bremszylinder gespreizt wird. Dabei wird die Bremsbacke beim Spreizen elastische so verformt, dass sie sich am ganzen Umfang an die Bremstrommel anschmiegt.

Die DE 434 900 C offenbart eine Bremsvorrichtung für Kraftfahrzeuge mit auf die Innenseite der Bremstrommel wirkender, bogenförmiger, mehrfach abgestützter Bremsbacke.

Figur 4 der FR 8 22 402 A zeigt eine Bremsvorrichtung mit einem als offenen Ring ausgebildeten Bremsträger, dessen Enden beim Bremsen auseinander gedrückt werden.

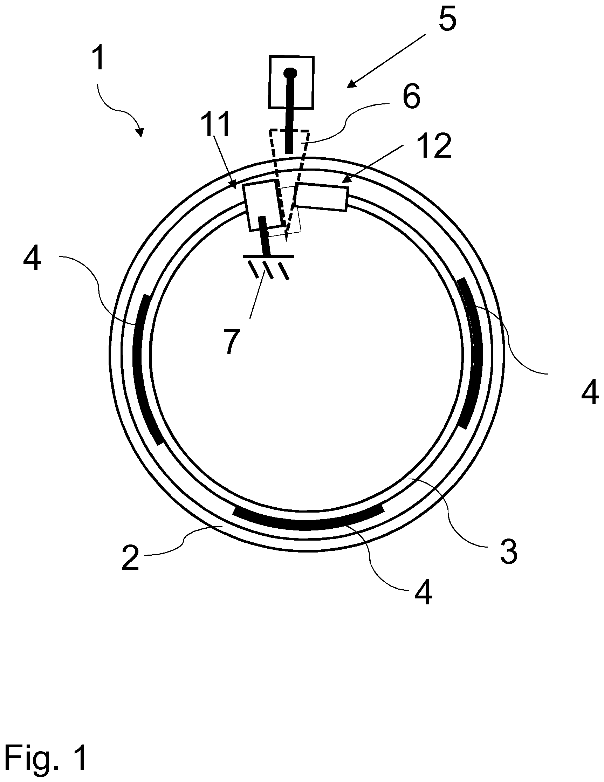

Aus der US 3 368 648 A sind - auf zwei zueinander verschwenkbaren Bremsbacken - Bremsbeläge zu erkennen deren Schichtdicke sich in Umlaufrichtung gesehen verändern (siehe hierzu insbesondere Figur 1 der D5).

Die GB 457 4720 A offenbart eine Bremsvorrichtung mit einem Nachstellmechanismus, bei dem der Bremsbelagsträger ausgerichtet wird mittels eines Ratschensystems und ein aus zueinander verschiebbaren Keilen als Kraftübertragungsmittel zwischen dem Aktuator (H) und dem Bremsbelagsträger ausgebildet ist. Die zueinander verschiebbaren Keile ändern ihre relative Ausrichtung zueinander mittels einer Feder und sorgen so automatisch für eine Anpassung der räumlichen Ausdehnung des Kraftübertragungsmittels zwischen dem Aktuator und dem Bremsbelagsträger.

Aus der US 2 041 536 A ist eine Bremsvorrichtung mit unregelmäßig angeordneten Bremsbeläge bekannt (Seite 2, Zeilen 11-37 und Abbildung 8).

Im Absatz [0031] der JP 2007 107 666 A werden unterschiedliche Reibwerte einzelner Bremsbeläge offenbart.

Die US 2002 162711 A1 zeigt eine Trommelbremse mit zwei Motoren als Aktuatoren für die Bremsbeläge.

Diese Aufgabe wird gelöst durch eine Bremsvorrichtung gemäß Anspruch 1 sowie durch ein Verfahren zum Bremsen eines Rads gemäß Anspruch 14. Weitere Vorteile und Merkmale der Erfindung ergeben sich aus den Unteransprüchen sowie der Beschreibung und den beigefügten Figuren.

Erfindungsgemäß ist eine Bremsvorrichtung zum Bremsen eines Rads, insbesondere eine Trommelbremse, vorgesehen, aufweisend eine Bremstrommel, einen in der Bremstrommel angeordneten oder anordenbaren Bremsbelagträger mit mindestens einem Bremsbelag, und eine Aktuatoreinrichtung zur reversiblen Überführung des Bremsbelagträgers zwischen einem Bremszustand, in dem der Bremsbelag mit der Bremstrommel in einer Wirkverbindung steht, und einem Freilaufzustand, in dem die Wirkverbindung zwischen dem Bremsbelag und der Bremstrommel aufgehoben ist, wobei der Bremsbelagträger zur Überführung vom Freilaufzustand in den Bremszustand elastisch deformierbar ist. Gegenüber dem Stand der Technik wird in vorteilhafter Weise der Bremsbelagträger derart ausgestaltet und angeordnet, dass der Bremsbelagträger von Bremszustand in den Freilaufzustand elastisch deformiert wird. D. h. ein Spannungszustandsverlauf entlang des Bremsbelagträgers ändert sich bei der Überführung des Bremsbelagträgers vom Freilaufzustand in den Bremszustand. Infolge der elastischen Deformation bei der Überführung kann in vorteilhafter Weise auf eine mit einer Vielzahl von Einzelteilen verbundene Anlenkung der Bremsbelagträger am Bremsträger zum Verschwenken verzichtet werden. Insbesondere ist es hierbei vorgesehen, dass der Bremsträger derart elastisch deformierbar ist, dass der elastisch deformierte Bremsbelagträger mit seinem Bremsbelag im Bremszustand in Anlage gerät mit einer Innenseite der Bremstrommel. Der über den Bremsbelagträger gegen die Innenseite der Bremstrommel gedrückte Bremsbelag bildet dann einen Reibungswiderstand, der zum Abbremsen der Bremstrommel führt, wodurch letztendlich das drehfest mit dem Bremsbelagträger verbundene Rad abgebremst werden kann. Der Bremsbelag ist dabei beispielsweise an den Bremsbelagträger angeschweißt oder angenietet. Weiterhin ist dem elastisch deformierten Bremsbelagträger insbesondere im deformierten Zustand eine Rückstellkraft zuzuordnen, die den Bremsbelagträger wieder in den Freilaufzustand zurückführt, wenn keine zusätzlichen Kräfte auf den Bremsbelagträger einwirken. Mit anderen Worten: der Bremsbelagträger ist im Bremszustand zweckmäßigerweise vorgespannt. Entsprechend bedarf es keines zusätzlichen Mechanismus, der den Bremsbelagträger vom Bremszustand in den Freilaufzustand zurückführt, sondern es reicht aus, die die elastische Deformation bewirkende Kraft aufzuheben. Weiterhin ist es vorteilhafterweise vorgesehen, dass der Bremsbelagträger einen Fixpunkt aufweist, der bei der Verlagerung des Bremsbelagträgers gegenüber dem Bremsträger ortsfest bleibt, während der Rest des Bremsbelagträgers deformiert wird. Vorstellbar ist auch, dass dem Bremsbelagträger im Freilaufzustand keine Rückstellkräfte zuzuordnen sind. Alternativ ist es auch denkbar, dass dem Bremsbelagträger im Freilaufzustand geringere Rückstellkräfte zuzuordnen sind als im Bremszustand, d. h. der Bremsbelagträger kehrt selbst im Freilaufzustand nicht in einen Zustand zurück, in dem ihm keine Rückstellkräfte zuzuordnen sind. Vorzugsweise handelt es sich bei der Bremsvorrichtung um eine solche Bremsvorrichtung, die für ein Nutzfahrzeug vorgesehen ist, wobei die Bremstrommel drehfest mit dem Rad verbunden. Hierbei ist die Bremsvorrichtung an einer starren, d. h. nicht rotierenden, Achse an deren Stirnseite montiert.

Grundsätzlich ist der Bremsbelagsträger derart elastisch deformierbar ausgestaltet, dass eine eigenständige, insbesondere federfreie, Rückkehr des Bremsbelagsträgers in den Freilaufzustand realisierbar ist. Mit anderen Worten: Zur Rückführung des Bremsbelagsträgers in den Freilaufzustand sind keine zusätzlichen Federelemente erforderlich, die in einem vom Bremsbelagsträger umschlossenen Bereich angeordnet sind.

Erfindungsgemäß ist es vorgesehen, dass der Bremsbelagträger gelenkfrei bzw. lagerfrei an den Bremsträger angebunden ist. Mit anderen Worten: der Bremsbelagträger erfährt ausschließlich eine Deformation und wird nicht mittels eines Gelenks oder eines Lagers verschwenkt. Dadurch kann mit Vorteil auf ein Gelenk oder ein Lager an der Schnittstelle zwischen Bremsbelagträger und Bremsträger verzichtet werden.

Vorzugsweise weist die Bremsvorrichtung einen einzigen Bremsbelagträger auf. Statt der Ausgestaltung mit zwei Bremsbacken lässt sich mit dem einzigen Bremsbelagträger die Zahl der Einzelbauteile weiter reduzieren. Zudem bedarf es nur einer einzigen Aktuatoreinrichtung und im Besonderen nur einer einzigen Nachstellvorrichtung, mit der ein Bremsbelagsverschleiß kompensiert wird. Dabei entfallen insbesondere Probleme, die sich bei der Verwendung von zwei Bremsbacken aufgrund der im Betrieb auftretenden asymmetrischen Belastung beim Nachstellen ergeben. Zur Zentrierung des Bremsbelagträger im Freilaufzustand ist vorzugsweise ein Federelement oder ein System aus Federn vorstellbar, mit dem der Bremsbelagträger im Freilaufzustand zentriert wird, um zu vermeiden, dass im Fahrtbetrieb auf den Bremsbelagträger wirkende Trägheitskräfte nicht zu einem unbeabsichtigten Kontakt zwischen dem Bremsbelag und der Bremstrommel führen.

Gemäß einer weiteren Ausführungsform der vorliegenden Erfindung ist es vorgesehen, dass sich der Bremsbelagträger in Umlaufrichtung gesehen um mehr als 180°, bevorzugt um mehr als 240° und besonders bevorzugt um mehr als 330° erstreckt. Dadurch wird in vorteilhafter Weise ein möglichst großer Bremsbelagträger bereitgestellt, wodurch ein für die Deformation erforderlicher Kraftaufwand reduziert werden kann und eine möglichst große Fläche für einen oder mehrere Bremsbeläge, die auf dem Bremsbelagträger angeordnet werden können, bereitgestellt wird.

Insbesondere ist der Bremsbelagträger als offener Ring ausgestaltet. Hierbei ist der Bremsbelagträger im Freilaufzustand vorzugsweise konzentrisch zur Bremstrommel angeordnet.

In einer weiteren Ausführungsform der vorliegenden Erfindung ist es vorgesehen, dass sich der Bremsbelagsträger in Umlaufrichtung gesehen um mehr als 180°, bevorzugt um mehr als 240° und besonders bevorzugt um mehr als 330° erstreckt und auf einer der Aktuatoreinrichtung gegenüberliegenden Seite der Bremsbelagsträger einen Bremsbelag aufweist. Vorzugsweise ist der Bremsbelagsträger als offener Ring ausgestaltet, wobei auf einer dem offenen Bereich des offenen Rings gegenüberliegenden Seite ein Bremsbelag am Bremsbelagsträger angeordnet ist. Vorstellbar ist es dabei, dass sich der dem offenen Bereich gegenüberliegende Bremsbelag in Umlaufrichtung gesehen weiter erstreckt als der offene Bereich. Insbesondere ist es vorgesehen, dass ein Verhältnis zwischen einer in Umlaufrichtung bemessenen Erstreckung des Bremsbelags, der dem offenen Bereich gegenüberliegt, zu einer in Umlaufrichtung bemessenen Erstreckung des offenen Bereichs einen Wert zwischen 0,5 und 0,95, bevorzugt zwischen 0,75 und 0,9 und besonders bevorzugt zwischen 0,78 und 0,88 annimmt.

Vorteilhafterweise ist ein erstes Ende des Bremsbelagträgers ortsfest zum Bremsträger festgelegt bzw. fixiert und die Aktuatoreinrichtung wirkt auf ein zweites Ende des Bremsbelagträgers. Hierbei ist es insbesondere vorstellbar, dass die Aktuatoreinrichtung zusammen mit dem ersten Ende des Bremsbelagträgers ortsfest am Bremsträger fixiert bzw. positioniert ist. Durch die Fixierung am ersten Ende wird ein sich in Umfangsrichtung aufsummierendes Bremsmoment vorteilhaft am Bremsträger abgestützt. Dabei stellt das erste Ende eine Art Festlagerung dar. Insbesondere ist die Aktuatoreinrichtung derart ausgestaltet, dass die von der Aktuatoreinrichtung auf den Bremsbelagträger wirkende Kraft zu einer radialen Bewegung des Bremsträgers führt. Hierbei nimmt ein radialer Versatz bei der Überführung zwischen dem Freilaufzustand und dem Bremszustand in Umlaufrichtung gesehen vom zweiten Ende zum ersten Ende ab. Für eine kontrollierte Bewegung des Bremsbelagträgers ist vorzugsweise am zweiten Ende eine Führung vorgesehen, die verhindert, dass die von der Aktuatoreinrichtung ausgehende Kraft nicht zu einer unkontrollierten bzw. ungewollten Deformation führt. Ferner ist es denkbar, dass die Aktuatoreinrichtung als Keilmechanismus oder als Simplexnockenmechanismus ausgestaltet ist. Sofern die Aktuatoreinrichtung als Simplexnockenmechanismus ausgestaltet ist, wirkt die Simplexnockenwelle ausschließlich mit dem zweiten Ende, wenn die Simplexnockenwelle gedreht wird.

Weiterhin ist es bevorzugt vorgesehen, dass das erste Ende des Bremsbelagsträgers und das zweite Ende des Bremsbelagsträgers, über die im Betrieb eine dem Aufspreizen dienende Kraft eingeleitet wird, in Umlaufrichtung gesehen zueinander fluchtend bzw. einander zugewandt angeordnet sind. Dadurch sind das erste Ende und das zweite Ende mit Vorteil auf derselben Höhe angeordnet, so dass die Wahrscheinlichkeit für ein Versatz und ein sich daraus ergebendes Verkanten des ersten und des zweiten Endes vermieden werden kann.

Zweckmäßig ist es vorgesehen, dass das erste Ende und/oder das zweie Ende des Bremsbelagsträgers eine in radialer Richtung bemessene Enddicke aufweist, die größer ist als eine in radialer Richtung bemessene Zwischendicke des Bremsbelagsträgers zwischen dem ersten Ende und dem zweiten Ende. Vorzugsweise nimmt das Verhältnis der Zwischendicke zur Enddicke einen Wert zwischen 0,15 und 0,75, bevorzugt zwischen 0,25 und 0,45 und besonders bevorzugt zwischen 0,33 und 0,43 an. Dadurch - insbesondere für ein Verhältnis zwischen 0,33 und 0,43 - wird eine Geometrie für den Bremsbelagsträger realisiert, bei dem das erste und/oder das zweite Ende derart aufweitet, dass ein stabiler Kontakt zwischen dem Bremsbelagsträger und der Aktuatoreinrichtung sichergestellt werden kann und andererseits das Gewicht des Bremsbelagsträger möglichst gering gehalten bzw. eine für die Funktionalität der Bremsvorrichtung ausreichende Deformierbarkeit realisiert werden kann.

In einer weiteren Ausführungsform der vorliegenden Erfindung ist es vorgesehen, dass die Aktuatoreinrichtung einen Keil aufweist, der am zweiten Ende des Bremsbelagträgers zur Anlage bringbar ist und zur reversiblen Überführung des Bremsbelagträgers zwischen dem Bremszustand und dem Freilaufzustand in radialer oder axialer Richtung bewegbar ist. Insbesondere lässt sich mittels des Keils der als offener Ring ausgestaltete Bremsbelagträger aufspreizen und dadurch in den gewünschten deformierten Zustand überführen. Hierbei ist es insbesondere vorgesehen, dass der Keil sich bei der Überführung vom Freilaufzustand in den Bremszustand am ortsfesten ersten Ende abstützt bzw. an diesem anliegt. Dadurch lässt sich in vorteilhafter Weise eine Wahrscheinlichkeit für eine in Umlaufrichtung gesehen nichtfluchtende Ausrichtung des ersten Ende und des zweiten Ende reduzieren, wodurch einem andernfalls möglichen Verkanten in der Bremsvorrichtung entgegengewirkt werden kann. Demnach lässt sich durch die Kombination aus einem ortsfesten ersten Ende und dem Keil die Bremsvorrichtung stabilisieren. Ferner ist es vorzugsweise vorgesehen, dass die Aktuatoreinrichtung derart ausgestaltet ist, dass sie dauerhaft, d. h. während des Freilaufzustands und des Bremszustands am zweiten Ende anliegt, oder nur zweitweise, d. h. ausschließlich während des Bremszustands bzw. zur Überführung in den Bremszustand. Der Keil wird beispielsweise durch ein hydraulisches oder pneumatisches System, insbesondere über einen Bremszylinder, zu seiner axialen oder radialen Verlagerung bzw. Bewegung angetrieben.

Insbesondere zur Kompensation eines im Betrieb der Bremsvorrichtung auftretenden Bremsbelagsverschleißes weist die Bremsvorrichtung in einer vorteilhaften Ausführungsform einen Nachstellmechanismus auf, der beispielsweise eingangsseitig, d. h. zwischen einem Bremszylinder und dem Keil, oder ausgangsseitig, d. h. im Bereich des zweiten Endes, realisiert wird. Alternativ ist es hierbei auch vorstellbar, dass zum Nachstellen zwischen dem Keil und dem zweiten Ende eine Lagerung, beispielsweise eine Rolle, bewegt wird, wobei die Lagerung zwangsgeführt wird und in einer Ruhelage derart angeordnet bzw. ausgerichtet ist, dass sich ein vorbestimmter Spalt zwischen dem Bremsbelag und der Innenseite des Bremstrommel einstellt. Hierfür werden die beim Aufspreizen zusammenwirkenden Kontaktflächen derart ausgestaltet, dass sie schräg zueinander verlaufen. Durch das Nachstellen ist es in vorteilhafter Weise möglich, den im Betrieb auftretenden Verschleiß an Bremsbelag zu kompensieren und so dauerhaft eine im Wesentlichen konstante Bremsleistung sicherzustellen. Insbesondere umfasst die Bremsvorrichtung nur einen einzigen Nachstellmechanismus. Dies ist trotz der entlang der Umlaufrichtung gesehenen unterschiedlichen Belastungen in vorteilhafter Weise möglich, wenn nur ein einziger als offener Ring ausgestalteter Bremsbelagträger innerhalb der Bremstrommel angeordnet wird.

Vorzugsweise ist der Keil zwischen dem ersten Ende und dem zweiten Ende des Bremsbelagträgers angeordnet. In dieser Ausrichtung ist der Keil unmittelbar in seinem Einsatzgebiet angeordnet, so dass im Wesentlichen kein unnötiger Weg überbrückt werden muss, bevor der Keil eine Überführung in den Bremszustand einleitet. Außerdem wird der vom offenen Ring bereitgestellte lichte Bereich bauraumökonomisch zur Anordnung des Keils genutzt.

Gemäß einer weiteren Ausführungsform der vorliegenden Erfindung ist vorgesehen, dass der Bremsbelagträger entlang seines Umfangs mehrere separate Bremsbeläge aufweist. Dabei lassen sich die mehreren Bremsbeläge, insbesondere bei einem als offener Ring ausgestalteten Bremsbelagträger, in ihrer Schichtdicke und Ausdehnung möglichst optimal auslegen. Hierbei ist es vorstellbar, dass die Bremsbeläge in Umlaufrichtung gesehen vom zweiten Ende zum ersten Ende kürzer oder länger werden. Weiterhin ist es vorstellbar, dass eine Schichtdicke des Bremsbelags innerhalb eines einzelnen Bremsbelags und/oder über mehrere Bremsbeläge in Umlaufrichtung gesehen vom zweiten Ende zum ersten Ende des Bremsbelagträgers zu- oder abnimmt. Insbesondere ist die Zu-/Abnahme kontinuierlich und ist abhängig von einer Ausrichtung des Bremsbelagträgers im Bremszustand. Dadurch lässt sich eine möglichst große Wirkfläche für die Bremsbeläge mit der Innenseite der Bremstrommel realisieren. Hierbei wird insbesondere berücksichtigt, dass eine elastische Deformation im Bereich des zweiten Endes größer ist als eine elastische Deformation im ersten Bereichs und sich entsprechend ein radialer Versatz des Bremsbelagträgers in Umlaufrichtung gesehen vom zweiten Ende zum ersten Ende ändert. Denkbar ist auch, dass die Bremsbelagträger unregelmäßig zueinander entlang der Umlaufrichtung angeordnet sind.

In einer bevorzugten Ausführungsform ist es vorgesehen, dass in Umlaufrichtung vom zweiten Ende zum ersten Ende gesehen hintereinander ein erster Bremsbelag mit einer ersten Schichtdicke und ein zweite Bremsbelag mit einer zweiten Schichtdicke angeordnet sind, wobei die erste Schichtdicke bevorzugt in einem Verhältnis von 1,05 bis 4, besonders bevorzugt von 1,2 bis 2 und insbesondere bevorzugt von ca. 1,4 bis 1,8 zur zweiten Schichtdicke steht. Dies ist vorteilhaft, da erwartungsgemäß der erste Bremsbelag häufiger in Bremswirkung tritt, als der zweite Bremsbelag. Auf diese Weise kann wiederum der Verschleiß des ersten relativ zum zweiten Bremsbelag derart angepasst werden, dass beide Bremsbeläge ungefähr zur selben Zeit ihre maximale Abnutzung erfahren. Das Verhältnis der Abriebbeständigkeit wird dabei bevorzugt in Abhängigkeit des zu erwartenden Einsatzprofils der Bremsvorrichtung im Einsatz im Kraftfahrzeug angepasst.

Bevorzugt ist der zweite Bremsbelag aus einem Material mit einem höheren Reibwert ausgebildet, als der erste Bremsbelag. Da der zweite Bremsbelag bevorzugt bei Vollbremsungen zum Einsatz gelangt, ist es vorteilhaft, dass bei diesen Bremsungen die Bremsbacke eine maximale Bremskraft erzeugt. Aus diesem Grund ist der zweite Bremsbelag mit Vorteil aus einem Material mit höherem Reibwert ausgebildet, als der erste Bremsbelag. Üblicherweise ist der Verschleiß eines Materials mit einem höherem Reibwert größer, als der Verschleiß eines Materials mit einem geringerem Reibwert, wobei es aus diesem Grund bevorzugt ist, den ersten Bremsbelag mit einem Material geringeren Reibwertes und damit auch geringem Verschleiß auszubilden, als den zweiten Bremsbelag.

Vorzugsweise ist der Reibwert des zweiten Bremsbelags ein 1,1- bis 3-faches bevorzugt ein 1,15- bis 2-faches und besonders bevorzugt ein 1,3- bis 1,7-faches des Reibwertes des ersten Bremsbelag. Je nach Einsatzprofil, welches für die Bremsvorrichtung im Betrieb im Nutzfahrzeug erwartet wird, kann es bevorzugt sein, den zweiten Bremsbelag aus einem Material mit deutlich höherem oder nur geringfügig höherem Reibwert auszubilden. So kann beispielsweise das Material des zweiten Bremsbelags den dreifachen Reibwert des Materials des ersten Bremsbelags aufweisen, um bei einer Vollbremsung einen deutlich gesteigerten Gesamtreibwert, bzw. mittleren Reibwert der gesamten Bremsvorrichtung zu erzielen. Andererseits kann es auch bevorzugt sein, dass der zweite Bremsbelag aus einem Material nur geringfügig höherem Reibwertes ausgebildet ist, als der erste Bremsbelag, wenn beispielsweise relativ häufige Vollbremsungen relativ zu den Teilbremsungen zu erwarten sind.

Weiterhin zweckmäßigerweise sind die Bremsbeläge entlang des Umfangs des Bremsbelagträgers unregelmäßig angeordnet.

Vorteilhafterweise ist es vorgesehen, dass ein Anteil von in Umlaufrichtung bemessenen Bereichen mit Bremsbelag zu einer in Umlaufrichtung bemessenen Gesamtlänge des Bremsbelagträgers zwischen 20%, und 90% bevorzugt zwischen 40 % und 80% und besonders bevorzugt zwischen 60% und 70% liegt.

Die Aufgabe wird ebenfalls mit einem Verfahren zum Bremsen eines Rads mit einer Bremsvorrichtung gemäß den vorhergehenden Ausführungen gelöst. Alle für die erfindungsgemäße Bremsvorrichtung beschriebenen Merkmale und deren Vorteile lassen sich sinngemäß ebenfalls auf das erfindungsgemäße Verfahren übertragen und andersherum.

Erfindungsgemäß ist es hierbei vorgesehen, dass der Bremsbelagträger zur Überführung des Bremsträgers vom Freilaufzustand in den Bremszustand elastisch deformiert wird. Hierbei wird die Überführung insbesondere durch eine Aktuierungsvorrichtung veranlasst. Ferner ist es vorgesehen, dass der Bremsbelagträger mittels einer Rückstellkraft, die dem vorgespannten Bremsbelagträger im Bremszustand zuzuordnen ist, vom Bremszustand in den Freilaufzustand zurückgeführt wird. Hierzu wird beispielsweise zur Überführung des Bremsbelagträger vom Bremszustand in den Freilaufzustand eine auf den Bremsbelagträger im Bremszustand wirkende Kraft unterbrochen bzw. aufgehoben, so dass die dem Bremsbelagträger im Bremszustand zuzuordnende Rückstellkraft den Bremsbelagträger automatisch in den Freilaufzustand zurückführt.

Weitere Vorteile und Merkmale ergeben sich aus der nachfolgenden Beschreibung bevorzugter Ausführungsformen des erfindungsgemäßen Gegenstands mit Bezug auf die beigefügte Figur. Einzelne Merkmale der einzelnen Ausführungsform können dabei im Rahmen der Erfindung miteinander kombiniert werden

Es zeigt:
Fig.1: eine Bremsvorrichtung gemäß einer bevorzugten Ausführungsform der vorliegenden Erfindung.

In Figur 1 ist eine Bremsvorrichtung 1, insbesondere eine Trommelbremse, gemäß einer bevorzugten Ausführungsform der vorliegenden Erfindung dargestellt. Solch eine Bremsvorrichtung 1 ist insbesondere für Nutzfahrzeuge vorgesehen und dient dem Bremsen eines Rads des Nutzfahrzeugs. Dabei ist die Bremsvorrichtung 1 vorzugsweise für Starrachsen vorgesehen, d. h. für solche Achsen, die starr bzw. drehfest an der Fahrzeugkarosserie bzw. an dem Chassis angeordnet sind. Die Rotation des Rads wird hierbei durch ein am Ende der Starrachse angeordnetes Lager, insbesondere ein Kegelrollenlager, bewirkt. Der gegenüber der Starrachse rotierende Teil des Lagers ist ferner über eine Nabe mit einer Bremstrommel 2 verbunden. Um einer Rotationsbewegung der Bremstrommel 2 und damit des Rads entgegenzuwirken, ist innerhalb der Bremstrommel 2 ein Bremsbelagträger 3 mit Bremsbelägen 4 angeordnet. Dabei sind die Bremsbeläge 4 an einer der Bremstrommel 2 zugewandten Seite des Bremsbelagträgers 3 angeordnet. In dem dargestellten Ausführungsbeispiel erstreckt sich der Bremsbelagträger 3 in Umlaufrichtung um mehr als 330° und entlang der Umlaufrichtung sind drei voneinander separate Bremsbeläge 4 angeordnet. In einem Bremszustand ist es hierbei vorgesehen, dass die Bremsbeläge 4 in Wirkverbindung mit einer Innenseite der Bremstrommel 2 treten. Insbesondere treten die Bremsbeläge 4 derart mit der Innenseite der Bremstrommel 2 während des Bremszustands in Kontakt, dass die an der Innenseite der Bremstrommel 2 anliegenden Bremsbeläge 4 in Umlaufrichtung gesehen kraftschlüssig mit der Innenseite der Bremstrommel 2 zusammenwirken. Insbesondere bildet der Bremsbelag 4 einen Reibwiderstand, der das Bremsen der Bremstrommel 2 und damit des Rads veranlasst. Um das Rad wieder rotieren zu lassen, wird die Wirkverbindung zwischen der Bremstrommel 2 und dem Bremsbelag 4 in einem Freilaufzustand wieder aufgehoben. Im Besonderen ist es vorgesehen, dass der Bremsbelagträger 3 derart ausgestaltet und angeordnet ist, dass er zur Überführung vom Freilaufzustand in den Bremszustand elastisch deformierbar ist. In dem in Figur 1 dargestellten Ausführungsbeispiel ist es vorgesehen, dass der Bremsbelagträger 3 im Freilaufzustand konzentrisch zur Innenseite der Bremstrommel 2 verläuft. Zur Überführung in den Bremszustand wird der als offener Ring ausgestaltete Bremsbelagträger 3 aufgespreizt, so dass der Bremsbelagträger 3 seine konzentrische Ausrichtung verlässt und auf die Innenseite der Bremstrommel 2 zubewegt wird bis die Bremsbeläge 4 in Wirkverbindung mit der Innenseite der Bremstrommel 2 treten. Hierbei ist ein erstes Ende 11 des Bremsbelagträgers 3, vorzugsweise an einem Bremsträger 7, ortsfest fixiert, so dass das zweite Ende 12 des Bremsbelagträgers 3 zum Aufspreizen, insbesondere entlang einer tangential zur Umlaufrichtung verlaufenden Richtung, bewegt werden muss. Hierbei ist es vorstellbar, dass der Bremsbelagträger 3 im Bereich des zweiten Endes 12 geführt ist, damit das zweite Ende 12 bei der Überführung des Bremsbelagträgers 3 vom Freilaufzustand in den Bremszustand eine kontrollierte Bewegung durchführt.

Um die Überführung vom Freilaufzustand in den Bremszustand zu veranlassen, ist eine Aktuatorvorrichtung 5 vorgesehen. Insbesondere umfasst die Aktuatoreinrichtung 5 einen Keil 6, der zur Überführung des Bremsbelagträges 3 vom Freilaufzustand in den Bremszustand in Anlage mit einem zweiten Ende 12 des Bremsbelagträgers 3 gebracht wird. In der dargestellten Ausführungsform ist es vorgesehen, dass der Keil 6 zur Überführung zwischen dem Bremszustand und dem Freilaufzustand radial bewegt wird. Durch die Bewegung des Keils 6 zwischen dem ersten Ende 11 und dem zweiten Ende 12 des Bremsbelagträgers 3 drücken die Seiten des Keils 6 das erste Ende 11 und das zweite Ende 12 auseinander, woraufhin der Bremsbelagträger 3 elastisch deformiert wird. Alternativ zu einer radialen Bewegung des Keils 6 zwischen dem ersten Ende 11 und dem zweiten Ende 12 ist es auch vorstellbar, dass der Keil 6 in axialer Richtung für die Überführung vom Freilaufzustand in den Bremszustand bewegt wird. Um die Bremsvorrichtung 1 wieder in den Freilaufzustand zurückzuführen, wird der Keil 6 wieder aus dem Bereich zwischen dem ersten Ende 11 und dem zweiten Ende 12 herausgezogen, so dass eine dem Bremsbelagträger 3 im Bremszustand zuzuordnende intrinsische Rückstellkraft den Bremsbelagträger 3 wieder in seine Ausgangslage zurückführt, in der der Bremsbelagträger 3 im Wesentlichen konzentrisch zur Innenseite der Bremstrommel 2 angeordnet ist.

### Bezugszeichenliste

- 1: Bremsvorrichtung
- 2: Bremstrommel
- 3: Bremsbelagträger
- 4: Bremsbelag
- 5: Aktuatorvorrichtung
- 6: Keil
- 7: Bremsträger
- 11: erstes Ende
- 12: zweites Ende

## Patentansprüche

1. Bremsvorrichtung (1) zum Bremsen eines Rads, insbesondere Trommelbremse, aufweisend
eine Bremstrommel (2),
einen in der Bremstrommel (2) angeordneten oder anordbaren Bremsbelagträger (3) mit mindestens einem Bremsbelag (4), und
eine Aktuatoreinrichtung (5) zur reversiblen Überführung des Bremsbelagträgers (3) zwischen einem Bremszustand, in dem der Bremsbelag (4) mit der Bremstrommel (2) in einer Wirkverbindung steht, und einem Freilaufzustand, in dem die Wirkverbindung zwischen dem Bremsbelag (4) und der Bremstrommel (2) aufgehoben ist,
wobei der Bremsbelagträger (3) zur Überführung vom Freilaufzustand in den Bremszustand elastisch deformierbar ist,
wobei ein erstes Ende (11) des Bremsbelagträgers (3) ortsfest zum Bremsträger (7) festgelegt ist und die Aktuatoreinrichtung (5) auf ein zweites Ende (12) des Bremsbelagträgers (3) wirkt und die Bremsvorrichtung (1) einen Nachstellmechanismus aufweist, der eingangseitig oder ausgangsseitig ausgestaltet ist **dadurch gekennzeichnet, dass** die Bremsvorrichtung (1) derart gestaltet ist, dass der Bremsbelagsträger (3) ausschließlich eine Deformation erfährt und gelenkfrei bzw. lagerfrei verschwenkt wird.

2. Bremsvorrichtung (1) gemäß Anspruch 1, wobei die Bremsvorrichtung (1) einen einzigen Bremsbelagträger (3) aufweist.

3. Bremsvorrichtung (1) gemäß einem der vorhergehenden Ansprüche, wobei sich der Bremsbelagträger (3) in Umlaufrichtung gesehen um mehr als 180° bevorzugt um mehr als 240° und besonders bevorzugt um mehr als 330° erstreckt.

4. Bremsvorrichtung (1) gemäß einem der vorhergehenden Ansprüche, wobei der Bremsbelagträger (3) als offener Ring ausgestaltet ist.

5. Bremsvorrichtung (1) gemäß einem der vorhergehenden Ansprüche, wobei die Aktuatoreinrichtung (5) einen Keil (6) aufweist, der am zweiten Ende (12) des Bremsbelagträgers (3) zur Anlage bringbar ist und zur reversiblen Überführung des Bremsbelagträgers (3) zwischen dem Bremszustand und dem Freilaufzustand in radialer oder axialer Richtung bewegbar ist.

6. Bremsvorrichtung (1) gemäß einem der vorhergehenden Ansprüche, wobei die Bremsvorrichtung (1) einen einzigen Nachstellmechanismus aufweist.

7. Bremsvorrichtung (1) gemäß Anspruch 5 oder 6, wobei der Keil (6) zwischen dem ersten Ende (11) und dem zweiten Ende (12) des Bremsbelagträgers (3) angeordnet ist.

8. Bremsvorrichtung (1) gemäß einem der vorhergehenden Ansprüche, wobei der Bremsbelagträger (3) entlang seines Umfangs mehrere separate Bremsbeläge (4) aufweist.

9. Bremsvorrichtung (1) gemäß einem der vorhergehenden Ansprüche, wobei eine Schichtdicke des Bremsbelags innerhalb eines Bremsbelags und/oder über mehrere Bremsbeläge in Umlaufrichtung gesehen vom zweiten Ende (12) zum ersten Ende (11) des Bremsbelagträgers (3) zu- oder abnimmt.

10. Bremsvorrichtung (1) gemäß Anspruch 8 oder 9, wobei in Umlaufrichtung vom zweiten Ende zum ersten Ende gesehen hintereinander ein erster Bremsbelag mit einer ersten Schichtdicke und ein zweite Bremsbelag mit einer zweiten Schichtdicke angeordnet sind, wobei die erste Schichtdicke bevorzugt in einem Verhältnis von 1,05 bis 4, besonders bevorzugt von 1,2 bis 2 und insbesondere bevorzugt von ca. 1,4 bis 1,8 zur zweiten Schichtdicke steht.

11. Bremsvorrichtung (1) gemäß Anspruch 10, wobei der erste Bremsbelag aus einem Material höherer Abriebbeständigkeit ausgebildet ist als der zweite Bremsbelag.

12. Bremsvorrichtung (1) gemäß Anspruch 10 oder 11, wobei ein Reibwert des zweiten Bremsbelags ein 1,1- bis 3-faches, bevorzugt 1,15- bis 2-faches und besonders bevorzugt 1,3- bis 1,7-faches des Reibwertes des zweiten Bremsbelags aufweist.

13. Bremsvorrichtung (1) gemäß einem der Ansprüche 8 bis 12, wobei die Bremsbeläge (4) entlang des Umfangs des Bremsbelagträgers (3) unregelmäßig angeordnet sind.

14. Verfahren zum Bremsen eines Rads mit einer Bremsvorrichtung gemäß einem der vorhergehenden Ansprüche, wobei der Bremsbelagträger zur Überführung des Bremsträgers vom Freilaufzustand in den Bremszustand elastisch deformiert wird.

## Claims

1. A brake device (1) for braking a wheel, in particular a drum brake, having
a brake drum (2),
a brake pad carrier (3) which is arranged or can be arranged in the brake drum (2) and has at least one brake pad (4), and
an actuator apparatus (5) for the reversible transfer of the brake pad carrier (3) between a braking state, in which the brake pad (4) is operatively connected to the brake drum (2), and a freewheeling state, in which the operative connection between the brake pad (4) and the brake drum (2) is canceled,
the brake pad carrier (3) being elastically deformable for the transfer from the freewheeling state into the braking state,
a first end (11) of the brake pad carrier (3) being fixed in a stationary manner with respect to the brake carrier (7), and the actuator apparatus (5) acting on a second end (12) of the brake pad carrier (3), and the brake device (1) having an adjusting mechanism which is configured on the inlet side or on the outlet side, **characterized in that** the brake device (1) is designed in such a way that the brake pad carrier (3) experiences exclusively a deformation and is pivoted in a joint-free and/or bearing-free manner.

2. The brake device (1) as claimed in claim 1, the brake device (1) having a single brake pad carrier (3).

3. The brake device (1) as claimed in either of the preceding claims, the brake pad carrier (3) extending, as viewed in the circulating direction, by more than 180°, preferably by more than 240°, and particularly preferably by more than 330°.

4. The brake device (1) as claimed in one of the preceding claims, the brake pad carrier (3) being configured as an open ring.

5. The brake device (1) as claimed in one of the preceding claims, the actuator apparatus (5) having a wedge (6) which can be brought into contact with the second end (12) of the brake pad carrier (3) and can be moved in the radial or axial direction for the reversible transfer of the brake pad carrier (3) between the braking state and the freewheeling state.

6. The brake device (1) as claimed in one of the preceding claims, the brake device (1) having a single adjusting mechanism.

7. The brake device (1) as claimed in claim 5 or 6, the wedge (6) being arranged between the first end (11) and the second end (12) of the brake pad carrier (3).

8. The brake device (1) as claimed in one of the preceding claims, the brake pad carrier (3) having a plurality of separate brake pads (4) along its circumference.

9. The brake device (1) as claimed in one of the preceding claims, a layer thickness of the brake pad increasing or decreasing from the second end (12) to the first end (11) of the brake pad carrier (3), as viewed in the circulating direction within one brake pad and/or over a plurality of brake pads.

10. The brake device (1) as claimed in claim 8 or 9, a first brake pad with a first layer thickness and a second brake pad with a second layer thickness being arranged behind one another as viewed in the circulating direction from the second end to the first end, the first layer thickness preferably being in a ratio of from 1.05 to 4, particularly preferably of from 1.2 to 2 and, in particular, preferably of from approximately 1.4 to 1.8 to the second layer thickness.

11. The brake device (1) as claimed in claim 10, the first brake pad being configured from a material of higher abrasion resistance than the second brake pad.

12. The brake device (1) as claimed in claim 10 or 11, a coefficient of friction of the second brake pad being from 1.1 to 3 times, preferably from 1.15 to 2 times and particularly preferably from 1.3 to 1.7 times the coefficient of friction of the second brake pad.

13. The brake device (1) as claimed in one of claims 8 to 12, the brake pads (4) being arranged irregularly along the circumference of the brake pad carrier (3).

14. A method for braking a wheel by way of a brake device as claimed in one of the preceding claims, the brake pad carrier being deformed elastically for the transfer of the brake carrier from the freewheeling state into the braking state.

## Revendications

1. Dispositif de freinage (1) pour freiner une roue, en particulier un frein à tambour, présentant
un tambour de frein (2),
un support de garniture de frein (3) agencé ou pouvant être agencé dans le tambour de frein (2) avec au moins une garniture de frein (4), et
un dispositif actionneur (5) pour faire passer de manière réversible le support de garniture de frein (3) entre un état de freinage dans lequel la garniture de frein (4) est dans une liaison fonctionnelle avec le tambour de frein (2), et un état en roue libre dans lequel la liaison fonctionnelle entre la garniture de frein (4) et le tambour de frein (2) est annulée,
dans lequel le support de garniture de frein (3) peut être déformé élastiquement pour faire passer depuis l'état en roue libre jusque dans l'état de freinage,
dans lequel une première extrémité (11) du support de garniture de frein (3) est définie à un point fixe par rapport au support de frein (7), et le dispositif actionneur (5) agit sur une deuxième extrémité (12) du support de garniture de frein (3), et le dispositif de freinage (1) présente un mécanisme de réajustage qui est réalisé côté entrée ou côté sortie, **caractérisé en ce que** le dispositif de freinage (1) est conçu de telle sorte que le support de garniture de frein (3) subit exclusivement une déformation et est pivoté sans articulation ou sans palier.

2. Dispositif de freinage (1) selon la revendication 1, dans lequel le dispositif de freinage (1) présente un unique support de garniture de frein (3).

3. Dispositif de freinage (1) selon l'une quelconque des revendications précédentes, dans lequel le support de garniture de frein (3), vu en direction périphérique, s'étend sur plus de 180°, de préférence sur plus de 240°, et de toute préférence sur plus de 330°.

4. Dispositif de freinage (1) selon l'une quelconque des revendications précédentes, dans lequel le support de garniture de frein (3) est réalisé comme un anneau ouvert.

5. Dispositif de freinage (1) selon l'une quelconque des revendications précédentes, dans lequel le dispositif actionneur (5) présente une cale (6) qui peut être amenée en contact contre la deuxième extrémité (12) du support de garniture de frein (3) et qui peut être déplacée dans une direction radiale ou axiale pour faire passer de manière réversible le support de garniture de frein (3) entre l'état de freinage et l'état en roue libre.

6. Dispositif de freinage (1) selon l'une quelconque des revendications précédentes, dans lequel le dispositif de freinage (1) présente un unique mécanisme de réajustage.

7. Dispositif de freinage (1) selon la revendication 5 ou 6, dans lequel la cale (6) est agencée entre la première extrémité (11) et la deuxième extrémité (12) du support de garniture de frein (3).

8. Dispositif de freinage (1) selon l'une quelconque des revendications précédentes, dans lequel le support de garniture de frein (3) présente plusieurs garnitures de frein séparées (4) le long de sa périphérie.

9. Dispositif de freinage (1) selon l'une quelconque des revendications précédentes, dans lequel une épaisseur de couche de la garniture de frein au sein d'une garniture de frein et/ou sur plusieurs garnitures de frein, vue en direction périphérique, augmente ou diminue depuis la deuxième extrémité (12) vers la première extrémité (11) du support de garniture de frein (3).

10. Dispositif de freinage (1) selon la revendication 8 ou 9, dans lequel une première garniture de frein avec une première épaisseur de couche et une deuxième garniture de frein avec une deuxième épaisseur de couche sont agencées l'une derrière l'autre, vues en direction périphérique, depuis la deuxième extrémité vers la première extrémité, dans lequel la première épaisseur de couche et la deuxième épaisseur de couche se trouvent de préférence dans un rapport de 1,05 à 4, en particulier de préférence de 1,2 à 2 et tout particulièrement de préférence d'environ 1,4 à 1,8.

11. Dispositif de freinage (1) selon la revendication 10, dans lequel la première garniture de frein est constituée d'un matériau d'une résistance à l'abrasion supérieure à celle de la deuxième garniture de frein.

12. Dispositif de freinage (1) selon la revendication 10 ou 11, dans lequel un coefficient de friction de la deuxième garniture de frein est 1,1 à 3 fois, de préférence 1,15 à 2 fois et de toute préférence 1,3 à 1,7 fois le coefficient de friction de la première garniture de frein.

13. Dispositif de freinage (1) selon l'une des revendications 8 à 12, dans lequel les garnitures de frein (4) sont agencées de manière irrégulière le long de la périphérie du support de garniture de frein (3).

14. Procédé de freinage d'une roue avec un dispositif de freinage selon l'une des revendications précédentes, dans lequel le support de garniture de frein est élastiquement déformé pour faire passer le support de frein depuis l'état en roue libre jusque dans l'état de freinage.
